# EUROPEAN PATENT APPLICATION

(11) **EP 2 204 934 A1**
(43) Date of publication of application: **07.07.2010**
(21) Application number: 09175535.5
(22) Date of filing: 10.11.2009
(51) Int. Cl.: H04J 14/06, H04J 14/02

(54) **Method, device, and system for polarization division multiplexing and demultiplexing**

(30) Priority: 30.12.2008 CN 200810242164
(71) Applicant: Huawei Technologies Co., Ltd., Longgang District, Shenzhen Guangdong 518129 (CN)
(72) Inventor: Chang, Deyuan, Shenzhen Guangdong 518129 (CN); Fang, Yuanyuan, Shenzhen Guangdong 518129 (CN); Zhao, Chan, Shenzhen Guangdong 518129 (CN); Xiong, Qianjin, Shenzhen Guangdong 518129 (CN)
(74) Representative: Barth, Stephan Manuel

(57) **Abstract**

A method, device, and system for polarization division multiplexing (PDM) and polarization division demultiplexing are provided in the field of communication and transmission. The device for polarization division demultiplexing includes a polarization controller (PC), a polarization beam splitter (PBS), a detection control module, an optoelectronic receiver 1, and an optoelectronic receiver 2. The PC is adapted to receive a PDM optical signal carrying an identification signal and perform polarization control on the PDM optical signal. The PBS is adapted to perform polarization division on the PDM optical signal carrying the identification signal after the polarization control. The detection control module is adapted to perform identification signal detection on the optical signal after the polarization division to obtain a power of the identification signal, and output a polarization control signal to control the PC according to a power change of the identification signal. The optoelectronic receiver 1 and the optoelectronic receiver 2 are adapted to perform demodulation reception on an X-polarization branch optical signal and a Y-polarization branch optical signal respectively to obtain a first original signal and a second original signal. Thereby, during polarization division demultiplexing, reversal of two demultiplexed polarization branches is effectively avoided.

## Description

### FIELD OF THE TECHNOLOGY

The present invention relates to the field of communication, and more particularly to a method, device, and system for polarization division multiplexing (PDM) and polarization division demultiplexing.

### BACKGROUND OF THE INVENTION

With the development of high-speed optical fiber transmission technology, polarization division multiplexing (PDM) technology is needed to enhance the spectral efficiency. The PDM technology allows different optical signals to be modulated respectively on two orthogonal polarization states at the same wavelength, thus increasing the transmission rate in the case of occupying the same band.

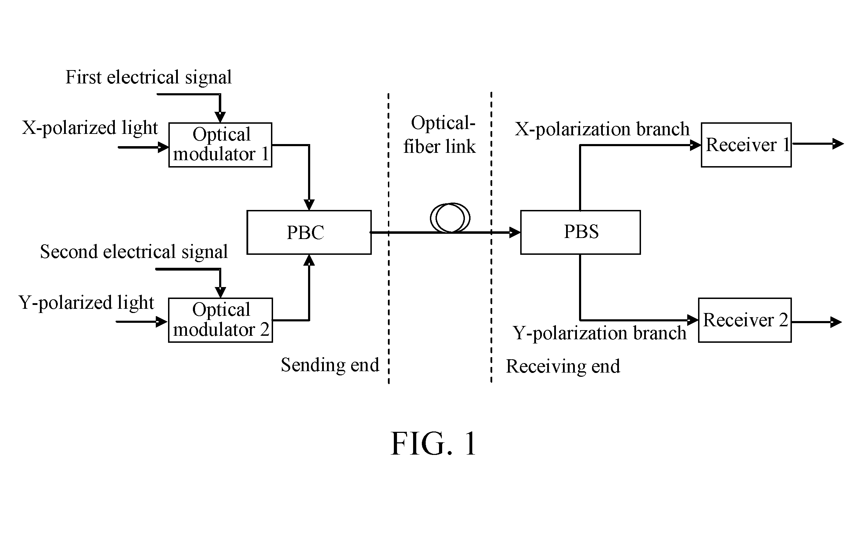

FIG. 1 is a system structure in which the PDM technology is applied. Taking a system with a single-wave bit rate of 40 Gb/s as an example, a sending end includes a first electrical signal and a second electrical signal. Each electrical signal carries a 20 Gb/s signal bit rate. An X-polarized light and a Y-polarized light in FIG. 1 are two polarized lights having their polarization states orthogonal to each other after polarization splitting of the same carrier emitted from a laser diode (LD). The first electrical signal modulates the X-polarized light with an optical modulator 1 to obtain a modulated X-polarized light. The second electrical signal modulates the Y-polarized light with an optical modulator 2 to obtain a modulated Y-polarized light. A polarization beam combiner (PBC) performs polarization combination on the modulated X-polarized light and the modulated Y-polarized light to obtain a PDM optical signal. When a receiving end performs polarization splitting on the PDM signal from the sending end to obtain an X-polarization branch optical signal and a Y-polarization branch optical signal, a receiver 1 receives the X-polarization branch optical signal and a receiver 2 receives the Y-polarization branch optical signal.

However, due to the polarization effect in an optical-fiber link, when an optical signal is transmitted in the optical fiber, random rotation and differential group delay (DGD) may occur to the polarization state. Moreover, in the case of a combination of various effects such as non-linearity and dispersion, mutual interferences and aliasing may also occur between two PDM branches, causing incorrect demultiplexing.

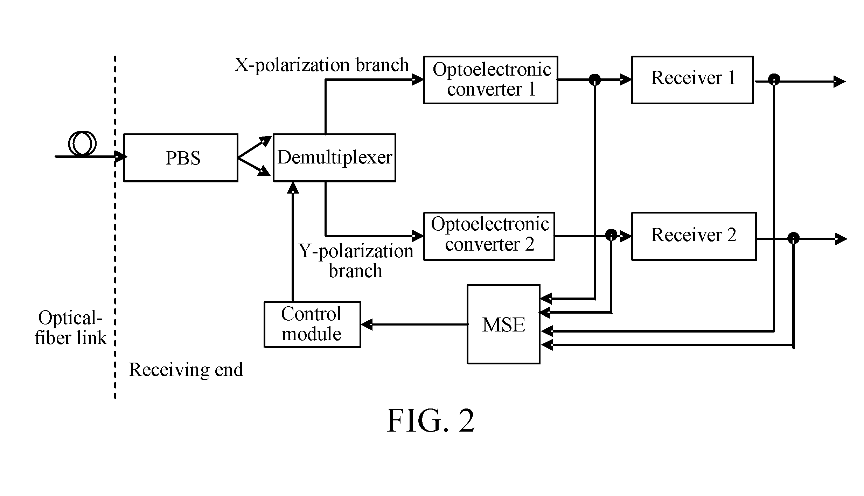

In the prior art, a solution shown in FIG. 2 is usually employed for demultiplexing. In the solution, a mean square difference of signals before and after the processing of the receiver is used as a feedback signal. Various parameters of a demultiplexer (DMUX) are controlled according to the feedback signal, so as to minimize the mean square difference. By adjusting the parameters of the DMUX, a transmission matrix of the DMUX is close to an inverse matrix of an optical-fiber link, so as to eliminate crosstalk and polarization mode dispersion (PMD) between the X-polarization branch optical signal and the Y-polarization branch optical signal obtained after the splitting of a polarization beam splitter (PBS), thereby achieving polarization division demultiplexing and PMD compensation.

However, in the implementation of the present invention, the inventor found that although the solution in FIG. 2 can eliminate crosstalk and PMD between the X-polarization branch optical signal and the Y-polarization branch optical signal obtained after the splitting of the PBS, it is unable to determine at a receiving end whether a received signal is a signal of another polarization branch. For example, it is possible that an X^{th}-polarization branch optical signal is corresponding to a modulation signal of a Y-polarized light at a sending end. That is to say, no measure for avoiding reverse reception of two polarization branches is provided, and this solution is also unable to control such continuous reversal of polarization branches that randomly occurs.

### SUMMARY OF THE INVENTION

Accordingly, the present invention is directed to a method, device, and system for polarization division multiplexing (PDM) and polarization division demultiplexing, so as to solve the problem in the prior art that reverse reception of two polarization branches is unable to be avoided.

In an embodiment, the present invention provides a method for PDM, which includes the following steps.

Polarization division is performed on an optical carrier to obtain an X-polarized light and a Y-polarized light having polarization states orthogonal to each other.

The X-polarized light is modulated and loaded with a first identification signal to obtain a first optical signal.

The Y-polarized light is modulated with a second electrical signal to obtain a second optical signal.

Polarization combination is performed on the first optical signal and the second optical signal to obtain a PDM optical signal carrying an identification signal.

In an embodiment, the present invention provides a method for polarization division demultiplexing, which includes the following steps.

A PDM optical signal carrying an identification signal is received, and polarization control is performed on the PDM optical signal with a polarization controller (PC) to obtain the PDM optical signal carrying the identification signal after the polarization control.

Polarization division is performed on the PDM optical signal carrying the identification signal after the polarization control to obtain an X-polarization branch optical signal and a Y-polarization branch optical signal.

Identification signal detection is performed on the X-polarization branch optical signal and/or the Y-polarization branch optical signal after the polarization division to obtain a power of the identification signal. A polarization control signal is output to control the PC according to a power change of the identification signal.

Demodulation reception is performed on the X-polarization branch optical signal to obtain a first original signal.

Demodulation reception is performed on the Y-polarization branch optical signal to obtain a second original signal.

In an embodiment, the present invention provides a device for PDM, which includes an optical source, a polarization beam splitter (PBS), a modulating and loading module, an optical modulator 2, and a polarization beam combiner (PBC).

The optical source is adapted to produce an optical carrier.

The PBS is adapted to perform polarization division on the optical carrier to obtain an X-polarized light and a Y-polarized light having polarization states orthogonal to each other.

The modulating and loading module is adapted to perform modulation and load a first identification signal on the X-polarized light to obtain a first optical signal.

The optical modulator 2 is adapted to modulate the Y-polarized light with a second electrical signal to obtain a second optical signal.

The PBC is adapted to perform polarization combination on the first optical signal and the second optical signal to obtain a PDM optical signal carrying an identification signal.

In an embodiment, the present invention further provides a device for polarization division demultiplexing, which includes a PC, a PBS, a detection control module, an optoelectronic receiver 1, and an optoelectronic receiver 2.

The PC is adapted to receive a PDM optical signal carrying an identification signal and perform polarization control on the PDM optical signal, so as to output a PDM optical signal carrying an identification signal after the polarization control.

The PBS is adapted to perform polarization division on the PDM optical signal carrying the identification signal after the polarization control to obtain an X-polarization branch optical signal and a Y-polarization branch optical signal.

The detection control module is adapted to perform identification signal detection on the X-polarization branch optical signal and/or the Y-polarization branch optical signal after the polarization division to obtain a power of the identification signal, and output a polarization control signal to control the PC according to a power change of the identification signal.

The optoelectronic receiver 1 is adapted to perform demodulation reception on the X-polarization branch optical signal to obtain a first original signal.

The optoelectronic receiver 2 is adapted to perform demodulation reception on the Y-polarization branch optical signal to obtain a second original signal.

In an embodiment, the present invention further provides a system for PDM and polarization division demultiplexing, which includes the device for PDM and the device for polarization division demultiplexing.

Therefore, in the embodiments of the present invention, an identification signal is loaded at a PDM end, an identification signal carried on a corresponding polarization branch is detected at a polarization division demultiplexing end, and polarization control is performed on a PDM signal according to the detected identification signal, so as to avoid reversal reception of two polarization branches during polarization division demultiplexing, thereby ensuring correct polarization division demultiplexing during reception.

### BRIEF DESCRIPTION OF THE DRAWINGS

The accompanying drawings are included to provide a further understanding of the invention, and are incorporated in and constitute a part of this specification instead of limiting the invention, and wherein:
FIG. 1 is a schematic structural view of a PDM system in the prior art;
FIG. 2 is a schematic structural view of a device for polarization division demultiplexing in the prior art;
FIG. 3 is a first schematic structural view of a device for PDM according to an embodiment of the present invention;
FIG. 4 is a second schematic structural view of a device for PDM according to an embodiment of the present invention;
FIG. 5 is a first schematic structural view of a device for polarization division demultiplexing according to an embodiment of the present invention;
FIG. 6 is a second schematic structural view of a device for polarization division demultiplexing according to an embodiment of the present invention;
FIG. 7 is a schematic structural view of a PMD compensating module according to an embodiment of the present invention; and
FIG. 8 is a schematic structural view of a system for PDM and polarization division demultiplexing according to an embodiment of the present invention.

### DETAILED DESCRIPTION OF THE EMBODIMENTS

In order to make it easier for persons of ordinary skill in the art to understand and implement the present invention, embodiments of the present invention are described below with reference to the accompanying drawings. Here, the exemplary embodiments of the present invention and descriptions thereof are intended to illustrate the present invention, instead of limiting the present invention.

In an embodiment, the present invention provides a method for PDM, which includes the following steps.

Polarization division is performed on an optical carrier to obtain an X-polarized light and a Y-polarized light having polarization states orthogonal to each other.

The X-polarized light is modulated and loaded with a first identification signal to obtain a first optical signal.

The Y-polarized light is modulated with a second electrical signal to obtain a second optical signal.

Polarization combination is performed on the first optical signal and the second optical signal to obtain a PDM optical signal carrying an identification signal.

That the X-polarized light is modulated and loaded with the first identification signal to obtain the first optical signal may be implemented as follows.

The first identification signal is loaded on a first electrical signal to obtain a first electrical signal carrying the first identification signal.

The X-polarized light is modulated with the first electrical signal carrying the first identification signal to obtain the first optical signal.

That the X-polarized light is modulated and loaded with the first identification signal to obtain the first optical signal may also be implemented as follows.

The X-polarized light is modulated with a first electrical signal to obtain an optical signal A.

The optical signal A is modulated with the first identification signal to obtain the first optical signal.

In the method for PDM, the second electrical signal may be a second electrical signal carrying a second identification signal.

In an embodiment, the present invention provides a method for polarization division demultiplexing, which includes the following steps.

A PDM optical signal carrying an identification signal is received, and polarization control is performed on the PDM optical signal with a PC to obtain the PDM optical signal carrying the identification signal after the polarization control.

Polarization division is performed on the PDM optical signal carrying the identification signal after the polarization control to obtain an X-polarization branch optical signal and a Y-polarization branch optical signal.

Identification signal detection is performed on the X-polarization branch optical signal and/or the Y-polarization branch optical signal after the polarization division to obtain a power of the identification signal. A polarization control signal is output to control the PC according to a power change of the identification signal.

Demodulation reception is performed on the X-polarization branch optical signal to obtain a first original signal.

Demodulation reception is performed on the Y-polarization branch optical signal to obtain a second original signal.

That the identification signal detection is performed on the X-polarization branch optical signal and/or the Y-polarization branch optical signal after the polarization division to obtain the power of the identification signal and the polarization control signal is output to control the PC according to the power change of the identification signal may be implemented as follows.

A part of the optical signal is extracted from the X-polarization branch optical signal in the optical signals after the polarization division, and the optical signal is detected to obtain a power of a first identification signal. When the power of the first identification signal is smaller than a set maximum power value, a polarization control signal is output to control the PC.

That the identification signal detection is performed on the X-polarization branch optical signal and/or the Y-polarization branch optical signal after the polarization division to obtain the power of the identification signal and the polarization control signal is output to control the PC according to the power change of the identification signal may also be implemented as follows.

A part of the optical signal is extracted from the X-polarization branch optical signal in the optical signals after the polarization division, and the optical signal is detected to obtain a power of a first identification signal. A part of the optical signal is extracted from the Y-polarization branch optical signal in the optical signals after the polarization division, and the optical signal is detected to obtain a power of a second identification signal. When a sum of the power of the first identification signal and the power of the second identification signal is smaller than a set maximum value of a power sum, a polarization control signal is output to control the PC.

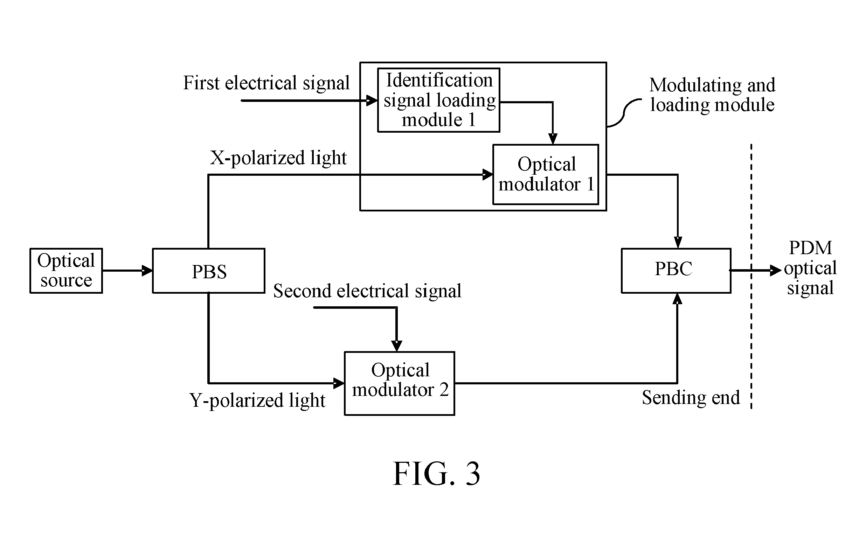

In an embodiment, the present invention provides a device for PDM, a first schematic structural view of which is shown in FIG. 3. The device for PDM includes an optical source, a PBS, a modulating and loading module, an optical modulator 2, and a PBC.

The optical source is adapted to produce an optical carrier.

The PBS is adapted to perform polarization division on the optical carrier to obtain an X-polarized light and a Y-polarized light having polarization states orthogonal to each other.

The modulating and loading module is adapted to perform modulation and load a first identification signal on the X-polarized light to obtain a first optical signal.

The optical modulator 2 is adapted to modulate the Y-polarized light with a second electrical signal to obtain a second optical signal.

The PBC is adapted to perform polarization combination on the first optical signal and the second optical signal to obtain a PDM optical signal carrying an identification signal.

As shown in FIG. 3, the modulating and loading module specifically includes an identification signal loading module 1 and an optical modulator 1.

The identification signal loading module 1 is adapted to generate a first identification signal and modulate a first electrical signal with the first identification signal to obtain a first electrical signal carrying the first identification signal.

The optical modulator 1 is adapted to modulate the X-polarized light with the first electrical signal carrying the first identification signal to obtain a first optical signal.

Besides the structure shown in FIG. 3, the modulating and loading module further has the following structure, including an optical modulator 1' and an identification signal loading module 1'.

The optical modulator 1' is adapted to modulate the X-polarized light with a first electrical signal to obtain an optical signal A.

The identification signal loading module 1' is adapted to generate a first identification signal and load the first identification signal on the optical signal A to obtain a first optical signal.

A plurality of identification signal loading modules may be added in any of the aforementioned modulating and loading modules to load a plurality of identification signals, and the mode of loading the identification signals is the same as the foregoing. The plurality of identification signals needs to be different, so as to be distinguished at the receiving end.

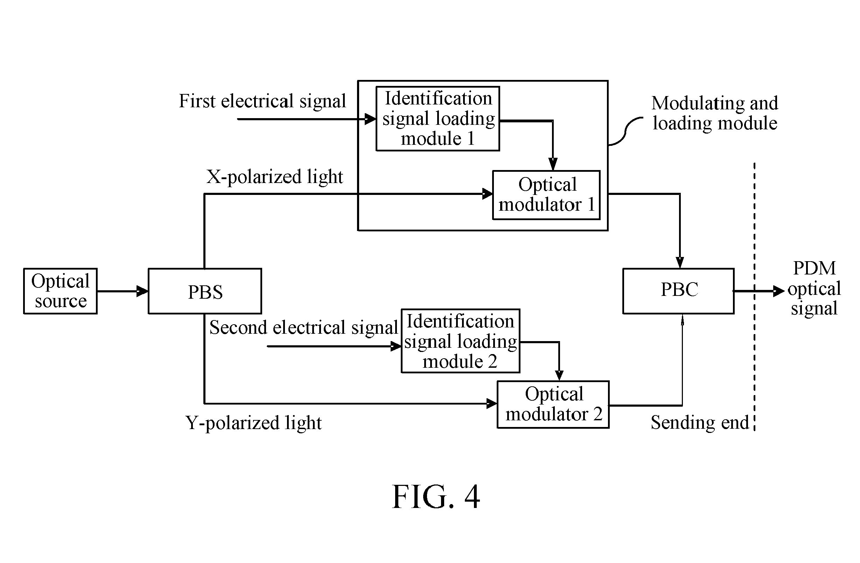

In an embodiment, the present invention provides a device for PDM, a second schematic structural view of which is shown in FIG. 4. The device for PDM includes an optical source, a PBS, a modulating and loading module, an identification signal loading module 2, an optical modulator 2, and a PBC.

The optical source is adapted to produce an optical carrier.

The PBS is adapted to perform polarization division on the optical carrier to obtain an X-polarized light and a Y-polarized light having polarization states orthogonal to each other.

The modulating and loading module is adapted to perform modulation and load a first identification signal on the X-polarized light to obtain a first optical signal.

The identification signal loading module 2 is adapted to generate a second identification signal and modulate a second electrical signal with the second identification signal to obtain a second electrical signal carrying the second identification signal.

The optical modulator 2 is adapted to modulate the X-polarized light with the second electrical signal carrying the second identification signal to obtain a second optical signal.

The PBC is adapted to perform polarization combination on the first optical signal and the second optical signal to obtain a PDM optical signal carrying an identification signal.

As shown in FIG. 4, the modulating and loading module specifically includes an identification signal loading module 1 and an optical modulator 1.

The identification signal loading module 1 is adapted to generate a first identification signal and modulate a first electrical signal with the first identification signal to obtain a first electrical signal carrying the first identification signal.

The optical modulator 1 is adapted to modulate the X-polarized light with the first electrical signal carrying the first identification signal to obtain a first optical signal.

Besides the structure shown in FIG. 4, the modulating and loading module further has the following structure, including an optical modulator 1' and an identification signal loading module 1'.

The optical modulator 1' is adapted to modulate the X-polarized light with a first electrical signal to obtain an optical signal A.

The identification signal loading module 1' is adapted to generate a first identification signal and load the first identification signal on the optical signal A to obtain a first optical signal.

The second identification signal loading module may not load the second identification signal on the second electrical signal, but only load the second identification signal on the optical signal output by the optical modulator 2, so as to obtain a second optical signal.

The modulating and loading module may have a plurality of identification signal loading modules adapted to load a plurality of identification signals. The second electrical signal may also be a second electrical signal carrying a plurality of identification signals, or the second optical signal may also be a second optical signal carrying a plurality of identification signals.

It should be noted that, the first identification signal and the second identification signal are different. When a plurality of identification signals is loaded, the plurality of identification signals needs to be different, so as to be distinguished at the receiving end.

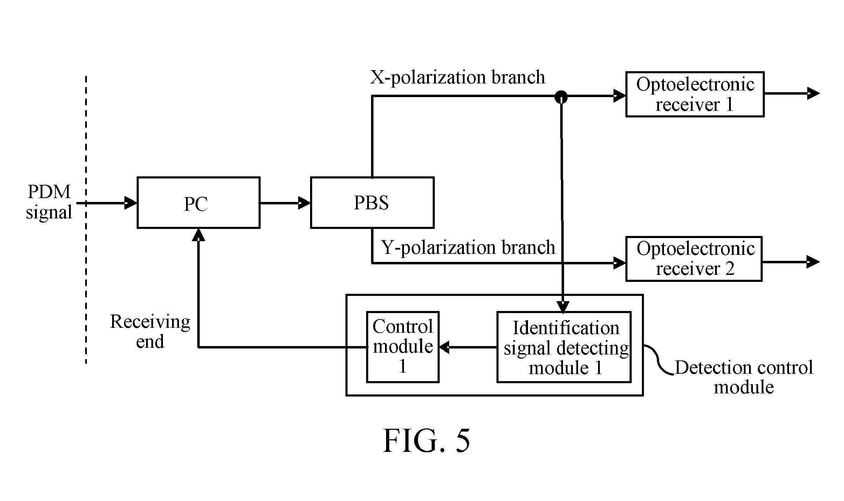

In an embodiment, the present invention provides a device for polarization division demultiplexing, which receives a PDM optical signal carrying an identification signal sent by a device for PDM in the present invention. A first schematic structural view of the device for polarization division demultiplexing is shown in FIG. 5. The device includes a PC, a PBS, a detection control module, an optoelectronic receiver 1, and an optoelectronic receiver 2.

The PC is adapted to receive a PDM optical signal carrying an identification signal and perform polarization control on the PDM optical signal, so as to output a PDM optical signal carrying an identification signal after the polarization control.

The PBS is adapted to perform polarization division on the PDM optical signal carrying the identification signal after the polarization control to obtain an X-polarization branch optical signal and a Y-polarization branch optical signal.

The detection control module is adapted to perform identification signal detection on the X-polarization branch optical signal and/or the Y-polarization branch optical signal after the polarization division to obtain a power of the identification signal, and output a polarization control signal to control the PC according to a power change of the identification signal.

The optoelectronic receiver 1 is adapted to perform demodulation reception on the X-polarization branch optical signal to obtain a first original signal.

The optoelectronic receiver 2 is adapted to perform demodulation reception on the Y-polarization branch optical signal to obtain a second original signal.

As shown in FIG. 5, the detection control module specifically includes an identification signal detecting module 1 and a control module 1.

The identification signal detecting module 1 is adapted to extract a part of the optical signal from the X-polarization branch optical signal in the optical signals after the polarization division, and detect a power of a first identification signal carried in the X-polarization branch optical signal.

The control module 1 is adapted to determine whether the power of the first identification signal reaches a set maximum power value, and generate a polarization control signal to control the PC if the power of the first identification signal is smaller than the set maximum power value.

Besides the structure shown in FIG. 5, the detection control module further has the following structure, including an identification signal detecting module 1' and a control module 1'.

The identification signal detecting module 1' is adapted to extract a part of the optical signal from the X-polarization branch optical signal in the optical signals after the polarization division, detect a power of a first identification signal carried in the X-polarization branch optical signal, extract a part of the optical signal from the Y-polarization branch optical signal in the optical signals after the polarization division, and detect a power of a second identification signal carried in the Y-polarization branch optical signal.

The control module 1' is adapted to determine whether a sum of the power of the first identification signal and the power of the second identification signal reaches a set maximum value of a power sum, and generate a polarization control signal to control the PC if the sum of the power of the first identification signal and the power of the second identification signal is smaller than the set maximum value of the power sum.

If a plurality of identification signals is loaded during the PDM, the detection control module detects a power of each identification signal on corresponding polarization branches in the foregoing manner respectively, and determines whether the detected power of each identification signal reaches a set maximum value of a power sum. If not, the detection control module generates a polarization control signal. During the polarization division demultiplexing, the identification signals loaded during the PDM are detected, so that the polarization state is tracked and adjusted to effectively avoid reversal reception of two polarization branches during the polarization division demultiplexing, thereby ensuring correct polarization division demultiplexing. A plurality of identification signals is loaded during the PDM, and thus interferences of noises to the identification signals can be effectively resisted, so as to enhance the reliability of polarization control.

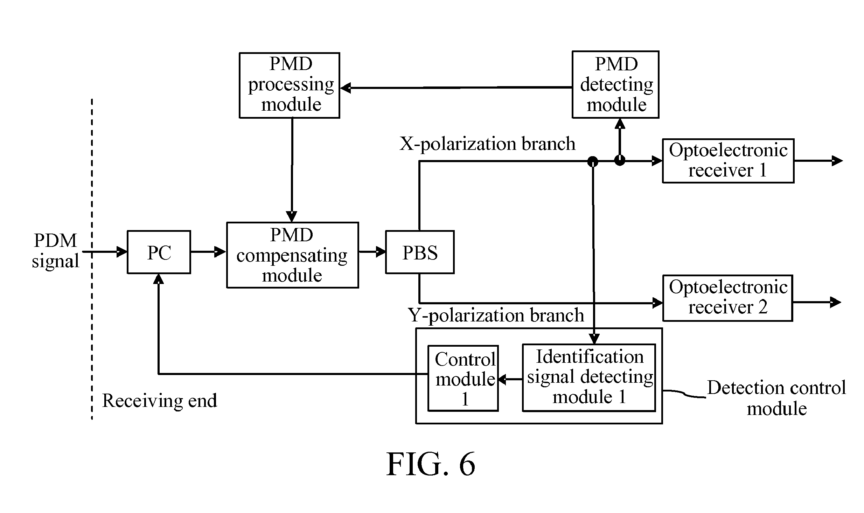

In an embodiment, the present invention provides a device for polarization division demultiplexing, which receives a PDM optical signal carrying an identification signal sent by a device for PDM in the present invention. A second schematic structural view of the device for polarization division demultiplexing is shown in FIG. 6. The device includes a PC, a PBS, a detection control module, a PMD detecting module, a PMD processing module, a PMD compensating module, an optoelectronic receiver 1, and an optoelectronic receiver 2.

The PC is adapted to receive a PDM optical signal carrying an identification signal and perform polarization control on the PDM optical signal, so as to output a PDM optical signal carrying an identification signal after the polarization control.

The PBS is adapted to perform polarization division on the PDM optical signal carrying the identification signal after the polarization control to obtain an X-polarization branch optical signal and a Y-polarization branch optical signal.

The detection control module is adapted to perform identification signal detection on the X-polarization branch optical signal and/or the Y-polarization branch optical signal after the polarization division to obtain a power of the identification signal, and output a polarization control signal to control the PC according to a power change of the identification signal.

The PMD detecting module is adapted to detect PMD on the optical signal after the polarization division.

The PMD processing module is adapted to generate a PMD compensation control signal according to the PMD.

The PMD compensating module is adapted to perform PMD compensation on the PDM signal carrying the identification signal according to the PMD compensation control signal.

The optoelectronic receiver 1 is adapted to perform demodulation reception on the X-polarization branch optical signal to obtain a first original signal.

The optoelectronic receiver 2 is adapted to perform demodulation reception on the Y-polarization branch optical signal to obtain a second original signal.

As shown in FIG. 6, the detection control module specifically includes an identification signal detecting module 1 and a control module 1.

The identification signal detecting module 1 is adapted to extract a part of the optical signal from the X-polarization branch optical signal in the optical signals after the polarization division, and detect a power of a first identification signal carried in the X-polarization branch optical signal.

The control module 1 is adapted to determine whether the power of the first identification signal reaches a set maximum power value, and generate a polarization control signal to control the PC if the power of the first identification signal is smaller than the set maximum power value.

Besides the structure shown in FIG. 6, the detection control module further has the following structure, including an identification signal detecting module 1' and a control module 1'.

The identification signal detecting module 1' is adapted to extract a part of the optical signal from the X-polarization branch optical signal in the optical signals after the polarization division, detect a power of a first identification signal carried in the X-polarization branch optical signal, extract a part of the optical signal from the Y-polarization branch optical signal in the optical signals after the polarization division, and detect a power of a second identification signal carried in the Y-polarization branch optical signal.

The control module 1' is adapted to determine whether a sum of the power of the first identification signal and the power of the second identification signal reaches a set maximum value of a power sum, and generate a polarization control signal to control the PC if the sum of the power of the first identification signal and the power of the second identification signal is smaller than the set maximum value of the power sum.

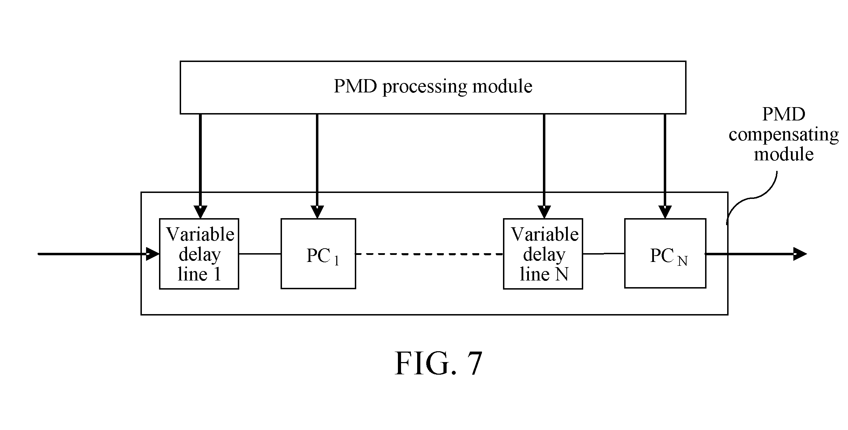

In an embodiment, the present invention further provides a PMD compensating module, a schematic structural view of which is shown in FIG. 7. The PMD compensating module includes N (N≥1) variable delay lines and N PCs.

The N variable delay lines and N PCs are interlaced and connected in series in the manner as shown in FIG. 7. Each variable delay line and PC are controlled by a control signal generated by a PMD processing module respectively to perform PMD compensation on the PDM signal.

The number N of the variable delay lines and the PCs is an integer greater than or equal to
1. The specific N value depends on the PMD produced in the PDM signal. For example, in the case of a relatively small PMD, the requirements are satisfied with N being set to 1. When the PMD is relatively serious, N is set to a value greater than 1, and multi-stage PMD compensation needs to be performed on the PDM signal. Through the PMD compensation solution, the PMD produced during signal transmission in an optical fiber may be effectively compensated, thereby ensuring correct polarization division demultiplexing during reception.

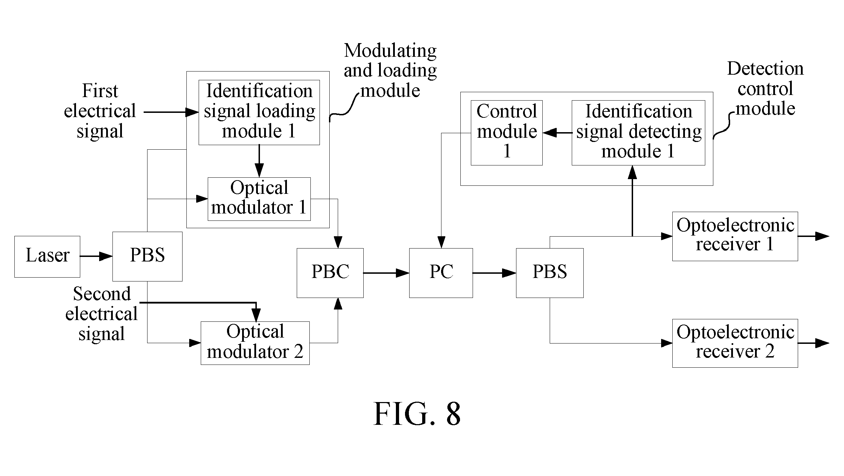

In an embodiment, the present invention further provides a system for PDM and polarization division demultiplexing, a schematic structural view of which is shown in FIG. 8. The system includes the device for PDM as shown in FIG. 3 and the device for polarization division demultiplexing as shown in FIG. 5, the description of which is omitted herein.

Through the above description of the embodiments, it is apparent to persons skilled in the art that the embodiments may be accomplished by software on a necessary universal hardware platform, and definitely may also be accomplished by hardware, in which the former is generally much preferred. Therefore, the above technical solutions or the part that makes contributions to the prior art can be substantially embodied in the form of a software product. The computer software product may be stored in a storage medium such as a ROM/RAM, a magnetic disk, or an optical disk, and contain several instructions to instruct a computer equipment (for example, a personal computer, a server, or a network equipment) to perform the method as described in the embodiments of the present invention or in some parts of the embodiments.

The above are only preferred embodiments of the present invention, but the scope of the present invention is not limited thereto. Variations and replacement easily made by persons skilled in the art without departing from the technical scope of the present invention should all fall within the scope of the present invention. Therefore, the scope of the present invention should be as defined by the scope of the claims.

## Claims

1. A method for polarization division multiplexing (PDM), comprising:
performing polarization division on an optical carrier to obtain an X-polarized light and a Y-polarized light having polarization states orthogonal to each other;
performing modulation and loading a first identification signal on the X-polarized light to obtain a first optical signal;
modulating the Y-polarized light with a second electrical signal to obtain a second optical signal; and
performing polarization combination on the first optical signal and the second optical signal to obtain a PDM optical signal carrying an identification signal.

2. The method according to claim 1, wherein the performing modulation and loading the first identification signal on the X-polarized light to obtain the first optical signal comprises:
loading the first identification signal on a first electrical signal to obtain a first electrical signal carrying the first identification signal; and
modulating the X-polarized light with the first electrical signal carrying the first identification signal to obtain the first optical signal.

3. The method according to claim 1, wherein the performing modulation and loading the first identification signal on the X-polarized light to obtain the first optical signal comprises:
modulating the X-polarized light with a first electrical signal to obtain an optical signal A; and
loading the first identification signal on the optical signal A to obtain the first optical signal.

4. The method according to claim 1, wherein the second electrical signal is a second electrical signal carrying a second identification signal.

5. A method for polarization division demultiplexing, comprising:
receiving a polarization division multiplexing (PDM) optical signal carrying an identification signal, and performing polarization control on the PDM optical signal with a polarization controller (PC) to obtain the PDM optical signal carrying the identification signal after the polarization control;
performing polarization division on the PDM optical signal carrying the identification signal after the polarization control to obtain an X-polarization branch optical signal and a Y-polarization branch optical signal;
performing identification signal detection on the X-polarization branch optical signal and/or the Y-polarization branch optical signal after the polarization division to obtain a power of the identification signal, and outputting a polarization control signal to control the PC according to a power change of the identification signal;
performing demodulation reception on the X-polarization branch optical signal to obtain a first original signal; and
performing demodulation reception on the Y-polarization branch optical signal to obtain a second original signal.

6. The method according to claim 5, wherein the performing the identification signal detection on the X-polarization branch optical signal and/or the Y-polarization branch optical signal after the polarization division to obtain the power of the identification signal, and outputting the polarization control signal to control the PC according to the power change of the identification signal comprises:
extracting a part of the optical signal from the X-polarization branch optical signal in the optical signals after the polarization division, detecting the optical signal to obtain a power of a first identification signal, and outputting a polarization control signal to control the PC when the power of the first identification signal is smaller than a set maximum power value.

7. The method according to claim 5, wherein the performing the identification signal detection on the X-polarization branch optical signal and/or the Y-polarization branch optical signal after the polarization division to obtain the power of the identification signal, and outputting the polarization control signal to control the PC according to the power change of the identification signal comprises:
extracting a part of the optical signal from the X-polarization branch optical signal in the optical signals after the polarization division, detecting the optical signal to obtain a power of a first identification signal, extracting a part of the optical signal from the Y-polarization branch optical signal in the optical signals after the polarization division, detecting the optical signal to obtain a power of a second identification signal, and outputting a polarization control signal to control the PC when a sum of the power of the first identification signal and the power of the second identification signal is smaller than a set maximum value of a power sum.

8. The method according to any one of claims 6 and 7, further comprising:
extracting a part of the optical signal from the X-polarization branch optical signal or the Y-polarization branch optical signal for detecting polarization mode dispersion (PMD);
generating a PMD compensation control signal according to the detected PMD; and
performing PMD compensation on the PDM optical signal carrying the identification signal according to the PMD compensation control signal.

9. A device for polarization division multiplexing (PDM), comprising:
an optical source, adapted to produce an optical carrier;
a polarization beam splitter (PBS), adapted to perform polarization division on the optical carrier to obtain an X-polarized light and a Y-polarized light having polarization states orthogonal to each other;
a modulating and loading module, adapted to perform modulation and load a first identification signal on the X-polarized light to obtain a first optical signal;
an optical modulator 2, adapted to modulate the Y-polarized light with a second electrical signal to obtain a second optical signal; and
a polarization beam combiner (PBC), adapted to perform polarization combination on the first optical signal and the second optical signal to obtain a PDM optical signal carrying an identification signal.

10. The device according to claim 9, wherein the modulating and loading module comprises:
an identification signal loading module 1, adapted to generate a first identification signal, and load the first identification signal on a first electrical signal to obtain a first electrical signal carrying the first identification signal; and
an optical modulator 1, adapted to modulate the X-polarized light with the first electrical signal carrying the first identification signal to obtain a first optical signal.

11. The device according to claim 9, wherein the modulating and loading module comprises:
an optical modulator 1', adapted to modulate the X-polarized light with a first electrical signal to obtain an optical signal A; and
an identification signal loading module 1', adapted to generate a first identification signal, and load the first identification signal on the optical signal A to obtain a first optical signal.

12. The device according to claim 9, 10, or 11, wherein the second electrical signal is a second electrical signal carrying a second identification signal.

13. A device for polarization division demultiplexing, comprising:
a polarization controller (PC), adapted to receive a polarization division multiplexing (PDM) optical signal carrying an identification signal and perform polarization control on the PDM optical signal, so as to output a PDM optical signal carrying an identification signal after the polarization control;
a polarization beam splitter (PBS), adapted to perform polarization division on the PDM optical signal carrying the identification signal after the polarization control to obtain an X-polarization branch optical signal and a Y-polarization branch optical signal;
a detection control module, adapted to perform identification signal detection on the X-polarization branch optical signal and/or the Y-polarization branch optical signal to obtain a power of the identification signal, and output a polarization control signal to control the PC according to a power change of the identification signal;
an optoelectronic receiver 1, adapted to perform demodulation reception on the X-polarization branch optical signal to obtain a first original signal; and
an optoelectronic receiver 2, adapted to perform demodulation reception on the Y-polarization branch optical signal to obtain a second original signal.

14. The device according to claim 13, wherein the detection control module comprises:
an identification signal detecting module 1, adapted to extract a part of the optical signal from the X-polarization branch optical signal in the optical signals after the polarization division, and detect the optical signal to obtain a power of a first identification signal; and
a control module 1, adapted to determine whether the power of the first identification signal reaches a set maximum power value, and generate a polarization control signal to control the PC if the power of the first identification signal is smaller than the set maximum power value.

15. The device according to claim 13, wherein the detection control module comprises:
an identification signal detecting module 1', adapted to extract a part of the optical signal from the X-polarization branch optical signal in the optical signals after the polarization division, detect the optical signal to obtain a power of a first identification signal, extract a part of the optical signal from the Y-polarization branch optical signal in the optical signals after the polarization division, and detect the optical signal to obtain a power of a second identification signal; and
a control module 1', adapted to determine whether a sum of the power of the first identification signal and the power of the second identification signal reaches a set maximum value of a power sum, and generate a polarization control signal to control the PC if the sum of the power of the first identification signal and the power of the second identification signal is smaller than the set maximum value of the power sum.

16. The device according to any one of claims 14 and 15, further comprising:
a polarization mode dispersion (PMD) detecting module, adapted to detect PMD on the part of the optical signal extracted from the X-polarization branch optical signal or the Y-polarization branch optical signal;
a PMD processing module, adapted to process the PMD to obtain a PMD compensation control signal; and
a PMD compensating module, adapted to perform PMD compensation on the PDM signal carrying the identification signal.

## Amended claims

### Amended claims in accordance with Rule 137(2) EPC.

**1.** A method for polarization division demultiplexing, comprising:
receiving a polarization division multiplexing (PDM) optical signal carrying an identification signal, and performing polarization control on the PDM optical signal with a polarization controller (PC) to obtain the PDM optical signal carrying the identification signal after the polarization control;
performing polarization division on the PDM optical signal carrying the identification signal after the polarization control to obtain an X-polarization branch optical signal and a Y-polarization branch optical signal;
performing identification signal detection on the X-polarization branch optical signal and/or the Y-polarization branch optical signal after the polarization division to obtain a power of the identification signal, and outputting a polarization control signal to control the PC according to a power change of the identification signal;
performing demodulation reception on the X-polarization branch optical signal to obtain a first original signal; and
performing demodulation reception on the Y-polarization branch optical signal to obtain a second original signal.

**2.** The method according to claim 1, wherein the performing the identification signal detection on the X-polarization branch optical signal and/or the Y-polarization branch optical signal after the polarization division to obtain the power of the identification signal, and outputting the polarization control signal to control the PC according to the power change of the identification signal comprises:
extracting a part of the optical signal from the X-polarization branch optical signal in the optical signals after the polarization division, detecting the optical signal to obtain a power of a first identification signal, and outputting a polarization control signal to control the PC when the power of the first identification signal is smaller than a set maximum power value.

**3.** The method according to claim 1, wherein the performing the identification signal detection on the X-polarization branch optical signal and/or the Y-polarization branch optical signal after the polarization division to obtain the power of the identification signal, and outputting the polarization control signal to control the PC according to the power change of the identification signal comprises:
extracting a part of the optical signal from the X-polarization branch optical signal in the optical signals after the polarization division, detecting the optical signal to obtain a power of a first identification signal, extracting a part of the optical signal from the Y-polarization branch optical signal in the optical signals after the polarization division, detecting the optical signal to obtain a power of a second identification signal, and outputting a polarization control signal to control the PC when a sum of the power of the first identification signal and the power of the second identification signal is smaller than a set maximum value of a power sum.

**4.** The method according to any one of claims 2 and 3, further comprising:
extracting a part of the optical signal from the X-polarization branch optical signal or the Y-polarization branch optical signal for detecting polarization mode dispersion (PMD);
generating a PMD compensation control signal according to the detected PMD; and
performing PMD compensation on the PDM optical signal carrying the identification signal according to the PMD compensation control signal.

**5.** A device for polarization division demultiplexing, comprising:
a polarization controller (PC), adapted to receive a polarization division multiplexing (PDM) optical signal carrying an identification signal and perform polarization control on the PDM optical signal, so as to output a PDM optical signal carrying an identification signal after the polarization control;
a polarization beam splitter (PBS), adapted to perform polarization division on the PDM optical signal carrying the identification signal after the polarization control to obtain an X-polarization branch optical signal and a Y-polarization branch optical signal;
a detection control module, adapted to perform identification signal detection on the X-polarization branch optical signal and/or the Y-polarization branch optical signal to obtain a power of the identification signal, and output a polarization control signal to control the PC according to a power change of the identification signal;
an optoelectronic receiver 1, adapted to perform demodulation reception on the X-polarization branch optical signal to obtain a first original signal; and
an optoelectronic receiver 2, adapted to perform demodulation reception on the Y-polarization branch optical signal to obtain a second original signal.

**6.** The device according to claim 5, wherein the detection control module comprises:
an identification signal detecting module 1, adapted to extract a part of the optical signal from the X-polarization branch optical signal in the optical signals after the polarization division, and detect the optical signal to obtain a power of a first identification signal; and
a control module 1, adapted to determine whether the power of the first identification signal reaches a set maximum power value, and generate a polarization control signal to control the PC if the power of the first identification signal is smaller than the set maximum power value.

**7.** The device according to claim 5, wherein the detection control module comprises:
an identification signal detecting module 1', adapted to extract a part of the optical signal from the X-polarization branch optical signal in the optical signals after the polarization division, detect the optical signal to obtain a power of a first identification signal, extract a part of the optical signal from the Y-polarization branch optical signal in the optical signals after the polarization division, and detect the optical signal to obtain a power of a second identification signal; and
a control module 1', adapted to determine whether a sum of the power of the first identification signal and the power of the second identification signal reaches a set maximum value of a power sum, and generate a polarization control signal to control the PC if the sum of the power of the first identification signal and the power of the second identification signal is smaller than the set maximum value of the power sum.

**8.** The device according to any one of claims 6 and 7, further comprising:
a polarization mode dispersion (PMD) detecting module, adapted to detect PMD on the part of the optical signal extracted from the X-polarization branch optical signal or the Y-polarization branch optical signal;
a PMD processing module, adapted to process the PMD to obtain a PMD compensation control signal; and
a PMD compensating module, adapted to perform PMD compensation on the PDM signal carrying the identification signal.

**9.** A system for polarization division multiplexing (PDM) and polarization division demultiplexing, comprising a device for polarization division multiplexing (PDM) and a device for polarization division demultiplexing,
wherein the device for polarization division multiplexing further comprises:
an optical source, adapted to produce an optical carrier;
a polarization beam splitter (PBS), adapted to perform polarization division on the optical carrier to obtain an X-polarized light and a Y-polarized light having polarization states orthogonal to each other;
a modulating and loading module, adapted to perform modulation and load a first identification signal on the X-polarized light to obtain a first optical signal;
an optical modulator 2, adapted to modulate the Y-polarized light with a second electrical signal to obtain a second optical signal; and
a polarization beam combiner (PBC), adapted to perform polarization combination on the first optical signal and the second optical signal to obtain a PDM optical signal carrying an identification signal;
and
wherein the device for polarization division demultiplexing further comprises:
a polarization controller (PC), adapted to receive a polarization division multiplexing (PDM) optical signal carrying an identification signal and perform polarization control on the PDM optical signal, so as to output a PDM optical signal carrying an identification signal after the polarization control;
a polarization beam splitter (PBS), adapted to perform polarization division on the PDM optical signal carrying the identification signal after the polarization control to obtain an X-polarization branch optical signal and a Y-polarization branch optical signal;
a detection control module, adapted to perform identification signal detection on the X-polarization branch optical signal and/or the Y-polarization branch optical signal to obtain a power of the identification signal, and output a polarization control signal to control the PC according to a power change of the identification signal;
an optoelectronic receiver 1, adapted to perform demodulation reception on the X-polarization branch optical signal to obtain a first original signal; and
an optoelectronic receiver 2, adapted to perform demodulation reception on the Y-polarization branch optical signal to obtain a second original signal.

**10.** The system according to claim 9, wherein the detection control module comprises:
an identification signal detecting module 1, adapted to extract a part of the optical signal from the X-polarization branch optical signal in the optical signals after the polarization division, and detect the optical signal to obtain a power of a first identification signal; and
a control module 1, adapted to determine whether the power of the first identification signal reaches a set maximum power value, and generate a polarization control signal to control the PC if the power of the first identification signal is smaller than the set maximum power value.

**11.** The system according to claim 9, wherein the detection control module comprises:
an identification signal detecting module 1', adapted to extract a part of the optical signal from the X-polarization branch optical signal in the optical signals after the polarization division, detect the optical signal to obtain a power of a first identification signal, extract a part of the optical signal from the Y-polarization branch optical signal in the optical signals after the polarization division, and detect the optical signal to obtain a power of a second identification signal; and
a control module 1', adapted to determine whether a sum of the power of the first identification signal and the power of the second identification signal reaches a set maximum value of a power sum, and generate a polarization control signal to control the PC if the sum of the power of the first identification signal and the power of the second identification signal is smaller than the set maximum value of the power sum.

**12.** The system according to any one of claims 10 and 11 , wherein the device for polarization division demultiplexing further comprises:
a polarization mode dispersion (PMD) detecting module, adapted to detect PMD on the part of the optical signal extracted from the X-polarization branch optical signal or the Y-polarization branch optical signal;
a PMD processing module, adapted to process the PMD to obtain a PMD compensation control signal; and
a PMD compensating module, adapted to perform PMD compensation on the PDM signal carrying the identification signal.
